**Europäisches Patentamt**

**European Patent Office**

**Office européen des brevets**

(11) Veröffentlichungsnummer: **0 149 805**
**B1**

(12) **EUROPÄISCHE PATENTSCHRIFT**

(45) Veröffentlichungstag der Patentschrift:
**07.10.87**

(51) Int. Cl.⁴: **F 16 L  11/08**

(21) Anmeldenummer: **84115618.5**

(22) Anmeldetag: **17.12.84**

(54) **Biegsamer Schlauch.**

(30) Priorität: **20.01.84  DE 3401931**

(43) Veröffentlichungstag der Anmeldung:
**31.07.85 Patentblatt 85/31**

(45) Bekanntmachung des Hinweises auf die Patenterteilung:
**07.10.87 Patentblatt 87/41**

(84) Benannte Vertragsstaaten:
**AT BE CH DE FR GB IT LI LU NL SE**

(56) Entgegenhaltungen:
**DE - A - 1 525 787**
**DE - A - 2 244 893**
**DE - B - 2 424 665**
**US - A - 2 829 671**
**US - A - 3 463 197**
**US - A - 3 481 368**

(73) Patentinhaber: **Continental Gummi-Werke Aktiengesellschaft, Königsworther Platz 1, D-3000 Hannover 1 (DE)**

(72) Erfinder: **Besche, Anton, Neuer Weg 1a, D-3540 Korbach (DE)**
Erfinder: **Hecker, Rolf, Am Schwimmbad 9, D-3544 Waldeck-Freienhagen (DE)**
Erfinder: **Schwarze, Klaus, Dipl. Ing., Am Taubenrain 5, D-3540 Korbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung bezieht sich auf biegsame Schläuche aus Gummi oder gummiähnlichen Kunststoffen mit in einer oder mehreren Lagen wendelig gewickelten untereinander gleichartigen und gleich bemessenen Festigkeitsträgern, wobei jede Lage von unter gleich grossen aber einander entgegengerichteten Winkeln gegen die Schlauchlängsachse untereinander verkreuzten oder miteinander verflochtenen, jeweils mehrere Festigkeitsträger enthaltenden Strängen aufgebaut ist (wie z.B. aus US-A-3 463 197 bekannt).

An technische Schläuche als biegsame Leitungselemente zum Fördern von Flüssigkeiten und Gasen und zum Übertragen von Drücken werden je nach den vorherrschenden Bedingungen des jeweiligen Einsatzgebietes verschiedene Anforderungen gestellt. In aller Regel wird Druckfestigkeit in bestimmten Grenzen bei zumindest angenäherter Volumenkonstanz auch unter dynamisch-pulsierendem Innendruck gefordert, wozu je nach den Umständen ausreichende Biegetüchtigkeit, mechanische Beständigkeit und Abriebfestigkeit, Unempfindlichkeit gegen chemische Einflüsse, elektrische Leitfähigkeit und andere Kriterien treten können. Es ist im allgemeinen ohne Schwierigkeiten möglich, durch die Wahl und die Anordnung der Festigkeitsträger hohe Schlauchinnendrücke zu beherrschen. Da in diesen Fällen aber, um Durchpressen des elastomeren Innenschlauches zwischen den Festigkeitsträgern hindurch zu verhindern, die letzteren in möglichst dichter Abdeckung eng nebeinenader zu packen sind, erhalten die Schläuche mit einer solchen Armierung gleichzeitig auch eine unerwünschte Versteifung, die in weiterer Folge zudem noch ihre dynamischen Festigkeitseigenschaften beeinträchtigt. Besonders ungünstige Bedingungen ergeben sich in dieser Hinsicht aus der Verwendung von Stahldrähten als Festigkeitsträgern, worauf wiederum zum Beherrschen extrem hoher Druckbeanspruchungen beispielsweise in Schlauchleitungen für hydraulische Brems-. Hub- und Steuersysteme nicht verzichtet werden kann.

Der Erfindung liegt demgemäss als Aufgabe zugrunde, Hoch- und Höchstdruckschläuche ohne Zugeständnisse an die geforderte Abdeckung ihrer Festigkeitsträgereinlagen in ihrem Biegeverhalten und ihren dynamischen Festigkeitseigenschaften zu verbessern. Diese Aufgabe wird für Schläuche der eingangs geschilderten Gattung nach der Erfindung dadurch gelöst, dass die in der einen Richtung verlaufenden Stränge einer Lage eine grössere Anzahl Festigkeitsträger als die in der anderen Richtung verlaufenden Stränge derselben Lage enthalten. Dabei kann die Differenz der Festigkeitsträgeranzahl in den Strängen einer Lage zwischen 1 bis zu (N-1) — N als die grössere Festigkeitsträgeranzahl gesehen — betragen. Wenn, was in aller Regel zutrifft, die Festigkeitsträger in zwei oder mehr getrennten Lagen übereinander in die Schlauchwandung eingebettet sind, empfiehlt es sich, das Zahlenverhältnis von Lage zu Lage umzukehren.

Der neuartige asymmetrische Schlauchaufbau führt zu überraschenden, in ihren vorteilhaften Auswirkungen nichtvorhersehbaren Ergebnissen. Die als Folge der verminderten Zahl von Festigkeitsträgern geringere Breite der in der einen Richtung aufgebrachten Stränge erlaubt ein dichtes Verflechten beider Strangsysteme, wodurch wiederum ein hoher Abdeckungsgrad und damit die erwünschte Sicherheit gegen Durchdrücken des elastomeren Schlauchwerkstoffes selbst unter der Einwirkung extrem hoher Innendrücke erreicht wird. Die geringere Faden- bzw. Drahtzahl in der gegenläufigen Richtung hat dazu eine festigkeitsmässig günstigere Auslastung der Fäden oder Drähte zur Folge, und gleichzeitig begründet sie eine für derartige Schläuche ungewöhnliche Biegewilligkeit. Die in vergleichbaren Schläuchen mit symmetrischer Armierung unvermeidliche Zwangsverformung der einzelnen Festigkeitsträger in den sich überdeckenden Strängen ist aufgrund der neuartigen Anordnung praktisch ganz vermieden, und da im gleichen Masse auch Scherbewegungen der Stränge gegeneinander unter dem Einfluss wechselnder Druckbelastungen ausgeschlossen sind, ist der sonst häufig vor allem an den Randdrähten beobachtete Verschleiss als Ursache vorzeitigen Ausfalls der Schläuche ausgeschaltet. Diese Besonderheiten und dazu die verbesserte Bewegungsmöglichkeit der Stränge gegeneinander lassen eine beträchtlich längere Lebensdauer der Schläuche selbst unter schwierigen Einsatzbedingungen erwarten.

Die Erfindung ist anhand der schematischen Darstellung eines Ausführungsbeispiels in der Zeichnung verdeutlicht. In der Zeichnung ist:

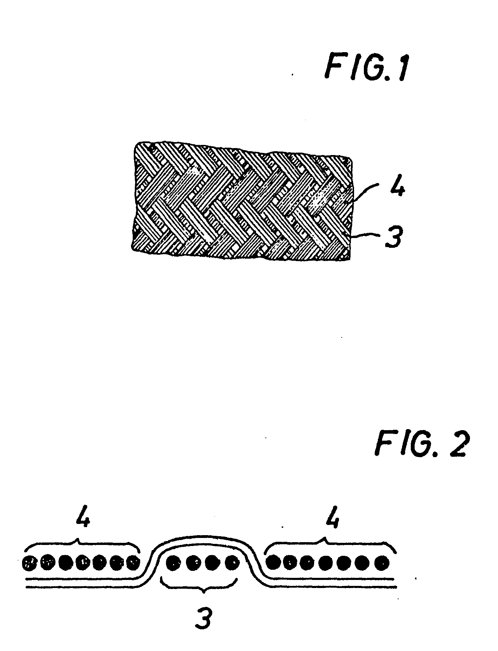

Fig. 1 ein Teilabschnitt eines neuartigen Schlauches als Draufsicht auf eine Geflechtslage und

Fig. 2 das Anordnungsschema zweier gegenläufiger Armierungsstränge.

Der gezeichneten Darstellung ist die Konstruktion eines Höchstdruckschlauches mit zwei durch eine Zwischengummischicht voneinander getrennten Stahldrahtgeflechtseinlagen zugrunde gelegt. Jede dieser Geflechtseinlagen ist aus zwei unter dem Normalwinkel von etwa 54°C einander kreuzenden Drahtsträngen 3, 4 aufgebaut, wobei jeweils der Strang 3 aus vier, der Strang 4 dagegen aus sieben Einzeldrähten untereinander gleichen Titers zusammengesetzt ist.

## Patentansprüche

1. Biegsamer Schlauch aus Gummi oder gummiähnlichen Kunststoffen mit in einer oder mehreren Lagen wendelig gewickelten untereinander gleichartigen und gleich bemessenen fadenförmigen Festigkeitsträgern, wobei jede Lage von unter gleich grossen aber einander entgegengerichteten Winkeln gegen die Schlauchlängsachse untereinander verkreuzten oder miteinander verflochtenen, jeweils mehrere Festigkeitsträger enthaltenden Strängen aufgebaut ist, dadurch gekennzeichnet, dass die in der einen Richtung verlaufenden Stränge (4) einer Lage eine grössere Anzahl Festigkeitsträger als die in der anderen Richtung verlaufenden Stränge (3) derselben Lage enthalten.

2. Schlauch nach Anspruch 1, dadurch gekennzeichnet, dass die Differenz der Festigkeitsträgeranzahl in den Strängen (3, 4) einer Lage zwischen 1 bis zu (N-1) beträgt, wobei N für die grössere Festigkeitsträgerzahl steht.

3. Schlauch nach den Ansprüchen 1 und 2, dadurch gekennzeichnet, dass das Zahlenverhältnis der Festigkeitsträger von Lage zu Lage umgekehrt ist.

4. Schlauch nach den Ansprüchen 1 bis 3, dadurch gekennzeichnet, dass die die grössere Anzahl Festigkeitsträger enthaltenden Stränge (4) mit einer höheren Vorspannung als die in Gegenrichtung verlaufenden Stränge (3) auf den Schlauch aufgebracht sind.

5. Schlauch nach den Ansprüchen 1 bis 3, dadurch gekennzeichnet, dass die die geringere Anzahl Festigkeitsträger enthaltenden Stränge (4) mit einer niedrigeren Vorspannung als die in Gegenrichtung verlaufenden Stränge (3) auf den Schlauch aufgebracht sind.

6. Schlauch nach den Ansprüchen 1 bis 5, dadurch gekennzeichnet, dass die Festigkeitsträger Stahldrähte sind.

7. Schlauch nach den Ansprüchen 1 bis 5, dadurch gekennzeichnet, dass die Festigkeitsträger Textil- oder hochfeste Kunststofffäden sind.

### Claims

1. Flexible hose formed from rubber or rubber-like plastics materials with filament-like reinforcing members of the same dimensions which are identical to one another and are helically wound in one or more plies, each ply being constructed from strands which intersect one another or are interwined with one another at angles of equal size but opposed to one another relative to the longitudinal axis of the hose, and each ply containing a plurality of reinforcing members, characterised in that the strands (4) of one ply which extend in one direction contain a larger number of reinforcing members than the strands (3) of the same ply which extend in the other direction.

2. Hose according to claim 1, characterised in that the difference in the number of reinforcing members in the strands (3, 4) of one ply varies between 1 and (N-1), where N stands for the larger number of reinforcing members.

3. Hose according to claims 1 and 2, characterised in that the ratio between the numbers of reinforcing members is inverted from ply to ply.

4. Hose according to claims 1 to 3, characterised in that the strands (4) containing the larger number of reinforcing members are applied to the hose with a higher initial tension than the strands (3) which extend in the opposite direction.

5. Hose according to claims 1 to 3, characterised in that the strands (4) which contain the smaller number of reinforcing members are applied to the hose with a lower initial tension than the strands (3) which extend in the opposite direction.

6. Hose according to claims 1 to 5, characterised in that the reinforcing members are steel wires.

7. Hose according to claims 1 to 5, characterised in that the reinforcing members are filaments of textile or highly resistant plastics materials.

### Revendications

1. Tuyau souple en caoutchouc ou matières synthétiques analogues au caoutchouc, comprenant des éléments résistants en forme de fils, qui sont entre eux de même type et de même dimension, et sont enroulés en hélice en une ou plusieurs couche(s), chaque couche étant composée de brins contenant chacun plusieurs éléments résistants, et qui sont croisés les uns par rapport aux autres ou tressés entre eux en formant des angles égaux eux mais opposés avec l'axe longitudinal du tuyau, caractérisé en ce que les brins (4) d'une couche qui s'étendent dans un premier sens contiennent un plus grand nombre d'éléments résistants que les brins (3) de la même couche qui s'étendent dans l'autre sens.

2. Tuyau selon la revendication 1, caractérisé en ce que la différence entre les nombres d'éléments résistants contenus dans les brins (3, 4) d'une même couche est comprise entre 1 et (N-1), où N est le plus grand nombre d'éléments résistants.

3. Tuyau selon les revendications 1 et 2, caractérisé en ce que le rapport des nombres des éléments résistants est inversé entre une couche et la suivante.

4. Tuyau selon les revendications 1 à 3, caractérisé en ce que les brins (4) qui contiennent le plus grand nombre d'éléments résistants sont appliqués sur le tuyau sous une plus grande tension de précontrainte que les brins (3) qui s'étendent dans le sens opposé.

5. Tuyau selon les revendications 1 à 3, caractérisé en ce que les brins (4) qui contiennent le plus petit nombre d'éléments résistants sont appliqués sur le tuyau avec une plus petite tension de précontrainte que les brins (3) qui s'étendent dans le sens opposé.

6. Tuyau selon les revendications 1 à 5, caractérisé en ce que les éléments résistants sont des fils d'acier.

7. Tuyau selon les revendications 1 à 5, caractérisé en ce que les éléments résistants sont des fils textiles ou des fils de matière plastique à haute résistance.

## FIG.1

4

3

## FIG. 2

4          4

3